Europäisches Patentamt

**European Patent Office**

Office européen des brevets

(19)

(11) Numéro de publication: **0 114 141**
**A2**

(12) **DEMANDE DE BREVET EUROPEEN**

(21) Numéro de dépôt: **84400084.4**

(22) Date de dépôt: **16.01.84**

(51) Int. Cl.³: **B 24 B 9/10**

(30) Priorité: **15.01.83 DE 3301170**

(43) Date de publication de la demande: **25.07.84**
**Bulletin 84/30**

(84) Etats contractants désignés: **BE CH DE FR GB IT LI LU NL SE**

(71) Demandeur: **SAINT-GOBAIN VITRAGE, Les Miroirs 18, avenue d'Alsace, F-92400 Courbevoie (FR)**

(84) Etats contractants désignés: **BE CH FR GB IT LI LU NL SE**

(71) Demandeur: **VEGLA Vereinigte Glaswerke GmbH, Viktoria Allee 3-5, D-5100 Aachen (DE)**

(84) Etats contractants désignés: **DE**

(72) Inventeur: **Reinmold, Heinz Josef, Schervierstrasse 6, D-5100 Aachen (DE)**
Inventeur: **Mucha, Horst, Severinstrasse 22, D-5100 Aachen (DE)**
Inventeur: **Friedrich, Hans Dieter, An den Sandgruben 7, D-5190 Stolberg (DE)**

(74) Mandataire: **Leconte, Jean-Gérard et al, Saint-Gobain Recherche 39, Quai Lucien Lefranc, F-93304 Aubervilliers Cedex (FR)**

(54) Procédé pour le pilotage automatique d'une machine à tête de meulage tournante pour meuler les bords de feuilles de verre, et dispositif pour la mise en oeuvre du procédé.

(57) L'invention concerne un procédé pour le pilotage automatique d'une machine à meuler les bords de feuilles de verre comprenant une tête de meulage portant l'outil de meulage montée sur un chariot composé qui se déplace suivant deux directions X et Y. La tête de meulage effectue une rotation de 360° pendant son déplacement autour de la feuille de verre, à l'aide d'un moteur vireur de tête commandé par programme.

Selon l'invention, les signaux de commande pour le moteur vireur sont dérivés, pendant l'opération de meulage, des signaux destinés au guidage X, Y du chariot composé.

On utilise pour cela un calculateur analogique formé de deux potentiomètres tournants (32', 32'') dont les axes de rotation (55, 56) sont couplés à l'axe de rotation (57) du moteur vireur (20).

PROCEDE POUR LE PILOTAGE AUTOMATIQUE D'UNE MACHINE A TETE DE MEULAGE

TOURNANTE POUR MEULER LES BORDS DE FEUILLES DE VERRE,

ET DISPOSITIF POUR LA MISE EN OEUVRE DU PROCEDE

La présente invention concerne le pilotage automatique d'une machine suivant un trajet, et notamment d'une machine à meuler les bords de feuilles de verre, dont la tête de meulage, qui porte l'outil de meulage, est montée sur un chariot à mouvement composé qui se déplace suivant deux directions X et Y perpendiculaires, la tête de meulage effectuant une rotation de 360° pendant son déplacement autour de la feuille de verre et un moteur vireur de tête commandé par programme régissant sa position angulaire.

Lorsque, par exemple, l'outil de meulage doit agir sur les bords de la feuille de verre avec une pression déterminée, orientée perpendiculairement aux bords, ou lorsqu'il faut compenser les modifications du diamètre de la meule dues à l'usure, la rotation de la tête de meulage au cours de son déplacement autour de la feuille de verre est nécessaire. A cette fin, il convient de monter l'outil de meulage déplaçable dans une direction, à l'intérieur de la tête de meulage tournante.

Une machine de ce type pour meuler les bords de feuille de verre commandée par programme est décrite par exemple dans le document DE OS 28 56519 . Dans cette réalisation connue, les signaux de commande pour le moteur vireur de la tête de meulage sont stockés sur le support d'information sur lequel sont également enregistrés les signaux destinés au pilotage X Y du chariot composé. Ceci exige un dispositif programmateur correspondant et/ou des mesures de programmation correspondantes lors de l'établissement du programme.011 14141 à supposer que le support d'information offre de la place pour les signaux de commande supplémentaire pour le moteur vireur de la tête de meulage.

L'invention a pour but de simplifier la commande par programme d'une machine de ce type pour meuler les bords de feuilles de verre de manière à exclure les sources d'erreurs possibles et à conférer, par conséquent, au dispositif un degré de fiabilité plus élevé.

Suivant l'invention, ceci est réalisé par le fait qu'on dérive, pendant l'opération de meulage, les signaux de commande pour le moteur vireur de la tête de meulage, des signaux stockés sur un support d'information et destinés au pilotage X Y du chariot composé.

Suivant l'invention, le support d'information ne contient donc pas de signaux de commande spéciaux pour le moteur vireur de la tête de meulage. Par conséquent, lors de l'établissement du programme de commande, il n'est plus nécessaire de prévoir de dispositif et/ou de pas de programme pour déterminer ces signaux de commande. L'opération de programmation est ainsi simplifiée et les risques d'erreurs sont exclus. Les signaux de commande pour la rotation de la tête de meulage ne sont déterminés que pendant l'opération de meulage, et ce à partir des signaux de commande qui servent au pilotage des moteurs d'entraînement X et Y pour le chariot composé.

L'angle de rotation de la tête de meulage entre deux instants $t_1$ et $t_2$ peut être calculé à partir des variations des vitesses de déplacement du chariot composé et donc de l'outil de meulage dans la direction X et dans la direction Y. La relation suivante existe en effet entre l'angle de rotation $\omega (t_2 - t_1)$, parcouru entre les instants $t_1$ et $t_2$ par la tête de meulage tournant avec une vitesse angulaire $\omega$ et les vitesses de déplacement $V_X$ dans la direction des X et $V_Y$ dans la direction des Y :

$$\omega (t_2 - t_1) = \text{arc tg} \frac{\Delta V_Y}{\Delta V_X}$$

ou $\Delta V$ indique la modification de vitesse entre les moments $t_2$ et $t_1$. Suivant l'invention, cette opération de calcul n'est pas effectuée lors de l'établissement du programme, mais n'a lieu que plus tard au moment où l'outil de meulage lui-même subit ces modifications de vitesse. Les signaux de commande qui en résultent sont alors déterminés en quelque sorte d'une manière synchrone avec les modifications de vitesse et sont utilisés directement pour la commande du moteur vireur de la tête de meulage.

L'opération de calcul peut, par exemple, être effectuée à l'aide d'un dispositif dans lequel intervient un microprocesseur qui traite les signaux de commande digitalisés pour les moteurs d'entraînement suivant les directions X et Y. Etant donné cependant que, avec le microprocesseur utilisé à cet effet, un certain intervalle de temps est nécessaire pour cette opération de calcul, un tel système est plus ou moins lent. Il ne convient donc que pour des machines à meuler à rotation lente correspondante.

Par conséquent, suivant une caractéristique avantageuse de l'invention, l'angle de rotation nécessaire est de préférence déterminé suivant un système de calcul analogique à l'aide d'un dispositif monté sur la machine à meuler elle-même. Des composants essentiels de ce calculateur analogique sont des instruments tournants à caractéristique sinus-cosinus, par exemple des potentiomètres tournants sinus-cosinus ou des générateurs tournants de fonctions à induction dont les axes de rotation sont reliés mécaniquement à l'axe de rotation du moteur vireur de la tête de meulage et qui sont pilotés par les tensions analogiques $(U_X, U_Y)$ correspondant aux vitesses de déplacement du chariot composé dans la direction X et dans la direction Y. Ces tensions analogiques sont fournies par des transducteurs et notamment des machines tachymétriques. La tension différentielle fournie par ces potentiomètres sinus-cosinus donne immédiatement la tension de commande pour l'appareil de régulation du moteur vireur de la tête de meulage, par exemple un servo-amplificateur.

D'autres particularités et réalisations avantageuses de l'invention ressortiront clairement des revendications et de la description suivante dans laquelle un exemple de réalisation préféré de l'invention est décrit plus en détail avec référence aux dessins annexés dans lesquels :

- la figure 1 illustre la structure mécanique d'une machine à meuler à laquelle s'applique le procédé selon l'invention, et notamment d'un chariot composé portant une tête de meulage tournante ;

- la figure 2 est une vue schématique du circuit de commande de la rotation de la tête de meulage ;

- la figure 3 est une vue schématique du circuit de commande pour la régulation de la pression de meulage ;

- la figure 4 est le schéma de commutation d'une régulation

préprogrammable de la pression de meulage lors d'un déplacement autour d'une feuille de verre.

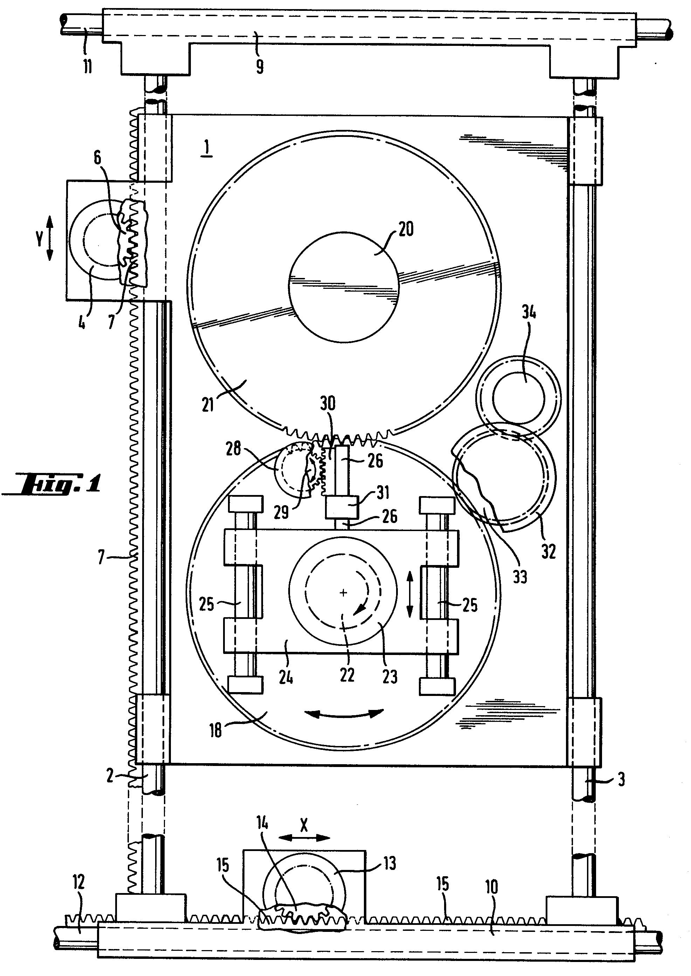

La structure mécanique d'une machine à meuler conforme à l'invention est illustrée dans ses parties essentielles sur la figure 1. Elle comporte un chariot 1 à mouvement composé, piloté suivant deux directions X et Y. Le montage et l'entraînement du chariot composé ainsi que le type de pilotage X, Y sont sans importance pour la commande du mouvement de rotation de la tête de meulage conforme à l'invention.

Ce chariot composé 1 est monté déplaçable dans la direction Y sur des rails 2, 3. L'entraînement s'effectue par l'intermédiaire d'un moteur d'entraînement 4 qui peut être monté sur le chariot composé 1, la transmission du mouvement étant assurée par un pignon d'entraînement 6 qui engrène une crémaïlère 7 disposée le long du rail 2.

Les rails 2, 3 portent à leurs extrémités des guides 9, 10 qui coulissent sur des rails 11, 12 parallèles l'un à l'autre dans la direction X. L'entraînement dans la direction X est assuré par l'intermédiaire d'un moteur d'entraînement 13 au moyen d'un pignon d'entraînement 14 qui engrène une crémaillère 15 disposée le long du rail 12.

Les moteurs 13 d'entraînement dans la direction X et 14 dans la direction Y sont commandés par programme selon des méthodes connues, le support du programme pouvant être une bande magnétique. Le programme du trajet peut être enregistré sur la bande magnétique, par exemple à l'aide d'un dispositif tel que décrit, par exemple, dans le document DE PS 28 50 127 (ou son correspondant européen EP 0 011 238).

Une tête de meulage 18 est montée tournante sur le chariot composé 1. La rotation de la tête de meulage est assurée par un moteur vireur 20 monté sur le chariot composé 1. Une roue dentée 21 permet la transmission du mouvement de rotation de l'axe d'entraînement du moteur vireur 20 à la tête de meulage 18 selon un rapport 1:1.

Dans la tête de meulage 18 est monté un chariot 24 déplaçable dans une direction en coulissant sur des rails de guidage 25. Ce chariot porte l'outil de meulage proprement dit, à savoir une meule 22, et le moteur de meulage 23. Une tige 26 disposée suivant la direction de déplacement du chariot est fixée au chariot 24. Sur cette tige est fixée une crémaillère 30, qui à l'aide d'un pignon 29 assure la transmission due à une force préétablie constante ou réglable, exercée par un moteur à couple constant 28. Le chariot 24 est relié à un dispositif de pression réglable, à savoir une capsule dynamométrique 31 montée sur la tige 26 qui mesure et règle la pression de meulage exercée par la

0114141

tige.

Un engrenage 33 relie mécaniquement la tête de meulage tournante 18 à deux instruments tournants à caractéristiques sinus-cosinus, groupés dans un boîtier 32. L'engrenage 33 couple les instruments tournants à la tête de meulage selon un rapport de rotation de 1:1. Une rotation de la tête de meulage 18 d'un angle $\alpha$ assure, par conséquent, une rotation des instruments tournants également d'un angle $\alpha$. Une machine tachymétrique 34 est également couplée par l'intermédiaire de l'engrenage 33 à la tête de meulage tournante 18 selon le même rapport de transmission 1:1. Les instruments tournants groupés dans le boîtier 32 et la machine tachymétrique 34 servent à commander le moteur vireur 20 de la tête de meulage.

A titre d'instruments tournants à caractéristique sinus-cosinus, on utilise, par exemple, des potentiomètres tournants à quatre quadrants du type SCB 50 de la société MEGATRON de Munich, Allemagne.

En variant, on peut aussi utiliser, par exemple, des générateurs tournants de fonctions sinus-cosinus tels que ceux fabriqués sous le numéro V 23 401 E 0012-B 001 par la Société SIEMENS.

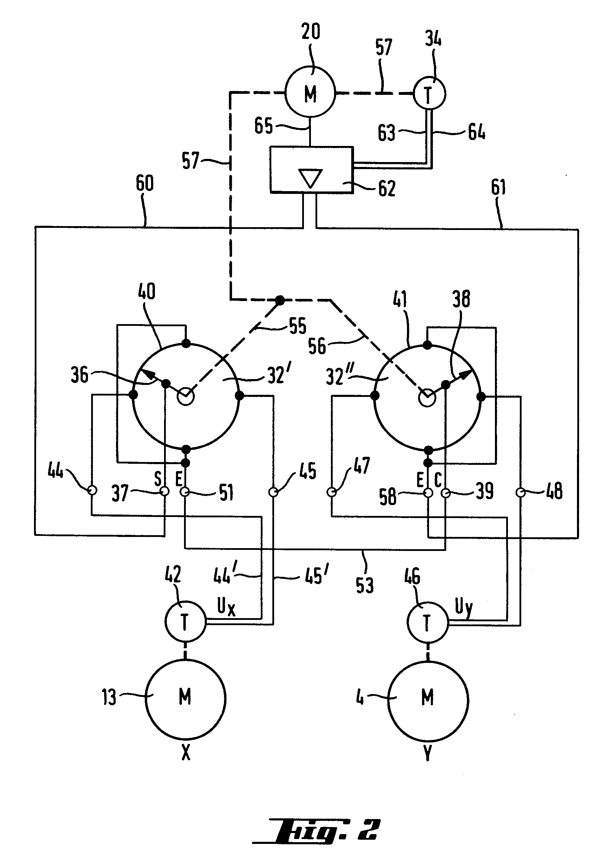

Deux potentiomètres sinus-cosinus 32' et 32" sont représentés dans le circuit de commande de la figure 2 mais, en pratique, ils sont groupés sous la forme d'un potentiomètre sinus-cosinus à double prise pour former une unité 32. Le potentiomètre 32' est associé à l'axe X et le potentiomètre 32" à l'axe Y. Ces potentiomètres sinus-cosinus 32' et 32" représentent le calculateur analogique qui dérive les signaux de commande pour le moteur vireur 20 de la tête de meulage à partir des vitesses des moteurs d'entraînement 13 et 4.

Les deux potentiomètres 32' et 32" possèdent des résistances annulaires 40, 41, divisées chacune en quatre quadrants, de sorte que la résistance dans les divers quadrants définit en alternance, un sinus et un cosinus. Dans le cas du potentiomètre 32' associé à l'axe X, les deux points neutres de la résistance annulaire sont reliés à la borne de connexion 51. Les points neutres du potentiomètre 32" associés à l'axe Y sont reliés à la borne de connexion 58 associée. La prise "sinusoïdale" 36 du potentiomètre 32' est reliée à la borne 37 et la prise "cosinusoïdale" 38 du potentiomètre 32" est reliée à la borne 39.

Une machine tachymétrique 42 est couplée au moteur d'entraînement 13 pour l'axe X et fournit une tension analogique $U_x$ caractéristique du mouvement de rotation de ce moteur d'entraînement 13.

0114141

Cette tension $U_x$ est amenée, par l'intermédiaire des conducteurs 44', 45', à des bornes de connexion 44, 45 du potentiomètre sinus-cosinus 32'.

De même une machine tachymétrique 46 est couplée au moteur d'entraînement 4 pour l'axe Y et fournit une tension analogique $U_y$ caractéristique du mouvement de rotation du moteur d'entraînement 4. Cette tension $U_y$ est appliquée à des bornes de connexion 47, 48 du potentiomètre sinus-cosinus 32".

Les potentiomètres sinus-cosinus 32' et 32" sont reliés en série l'un avec l'autre de sorte que la borne 51 reliée aux points neutres du potentiomètre 32' est connectée, par l'intermédiaire de la ligne 53, à la borne 39 du potentiomètre sinus-cosinus 32" reliée à la prise "cosinusoïdale" 38. Les axes de rotation 55, 56 des deux potentiomètres sont couplés à l'axe de rotation 57 du moteur vireur 20 selon un rapport 1:1. Par ailleurs, l'axe de la machine tachymétrique 34 est couplé à l'axe de rotation 57 du moteur vireur 20 selon un rapport 1:1.

La tension différentielle produite par le montage en série des deux potentiomètres sinus-cosinus 32' et 32", qui est prise d'une part à la borne 37 du potentiomètre 32' reliée à la prise sinusoïdale 36 et d'autre part à la borne 58 du potentiomètre 32" connectée au point neutre, est fournie, à titre de tension de consigne pour le régime du moteur 20, à un servo-amplificateur à quatre quadrants 62 par l'intermédiaire des lignes 60 et 61. Le servo-amplificateur 62 reçoit, d'autre part, la tension réelle provenant de la machine tachymétrique 34 couplée au moteur vireur 20 par l'intermédiaire des lignes 63 et 64. Le servo-amplificateur 62 pilote le moteur vireur 20 par l'intermédiaire de la ligne 65.

La tension différentielle des deux potentiomètres sinus-cosinus servant de tension de consigne devient nulle lorsque la relation mathématique

$$U_x \cdot \sin \omega (t_2 - t_1) = U_y \cdot \cos \omega (t_2 - t_1)$$

est satisfaite, $U_x$ et $U_y$ correspondant aux tensions caractéristiques des mouvements suivant l'axe X et l'axe Y fournies par les machines tachymétriques 42 et 46. Le moteur vireur 20 de la tête de meulage et ainsi la tête de meulage 18 elle-même, de même que les potentiomètres sinus-cosinus 32' et 32" qui y sont couplés tournent sous l'effet de la tension différentielle fournie au servo-amplificateur 62 jusqu'à ce que la relation mathématique précitée soit satisfaite et que cette tension différentielle soit nulle. La relation mathématique mentionnée plus

- 7 -

haut entre les écarts de vitesse dans la direction X et dans la direction Y et l'angle de rotation est ainsi satisfaite.

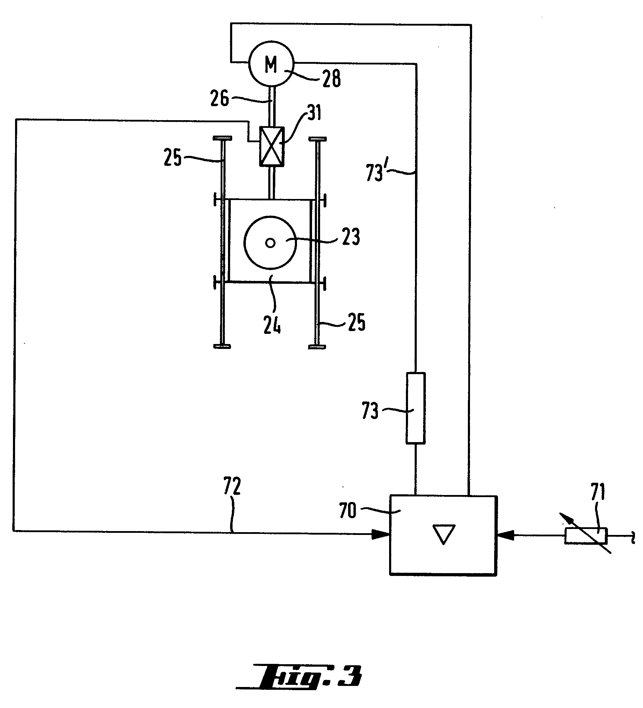

La rotation de la tête de meulage permet la régulation de la pression de meulage qui est produite par le moteur à couple constant 28 (figure 1). Le circuit de commande pour la régulation de la pression de meulage est représenté schématiquement sur la figure 3. Sur cette figure, apparaît le moteur 23 entraînant la meule qui est monté sur le chariot 24 déplaçable le long des rails 25. La pression d'appui de la meule sur le verre souhaitée est transmise à partir du moteur à couple constant 28 par l'intermédiaire de la tige 26 au chariot 24 et ce, avec intercalation de la capsule dynamométrique 31.

La commande du moteur à couple constant 28 est assurée par l'appareil de régulation, par exemple un servo-amplificateur, 70 dans lequel on introduit la valeur de consigne pour la pression par l'intermédiaire du potentiomètre 71. La valeur réelle de la pression est fournie par la capsule dynamométrique 31 et est amenée, par l'intermédiaire du conducteur 72, également au servo-amplificateur 70 qui, après comparaison de la valeur de consigne et de la valeur réelle, pilote le moteur à couple constant 28 par l'intermédiaire du conducteur 73'. Etant donné qu'aucune force électromotrice n'apparaît sur le moteur à couple constant, une résistance équivalente 73 est intercalée entre le moteur 28 et le servo-amplificateur 70.

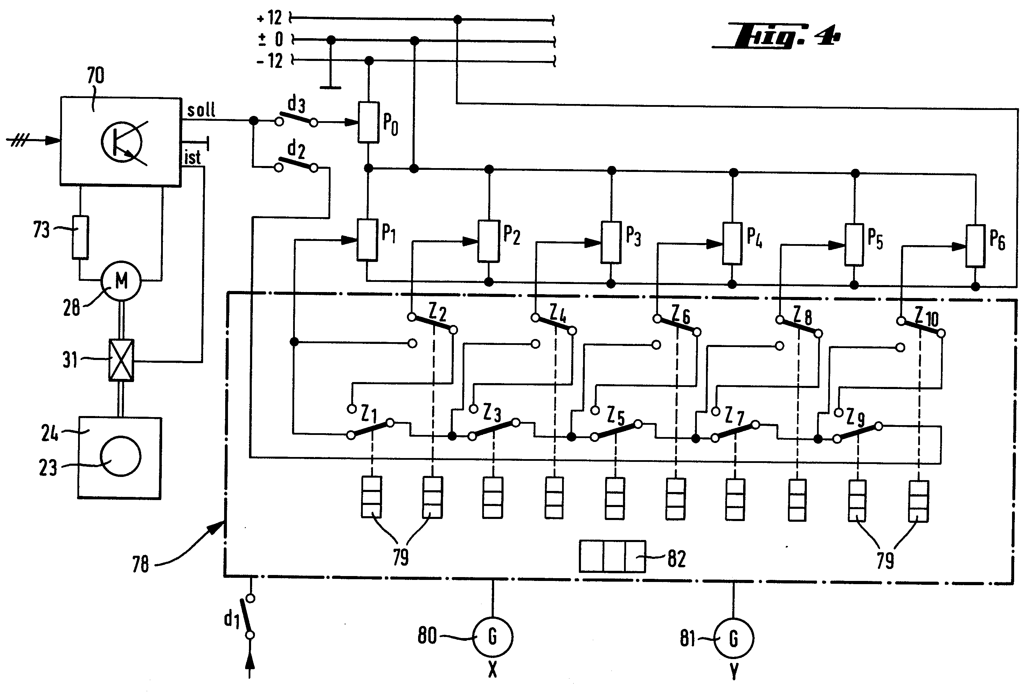

Il est aussi possible de faire varier la pression de meulage pendant que le chariot porte-outil 24 se déplace autour de la feuille de verre. Une telle variation de la pression de meulage est intéressante par exemple, lors du meulage de feuilles de verre présentant plusieurs coins aigus pour lesquelles il est avantageux de diminuer la pression de meulage lors du passage à ces endroits critiques. Dans ce cas, la pression de meulage peut être modifiée au cours du déplacement autour de la feuille de verre selon un programme pré-établi : à la place d'une valeur de consigne fixe, telle qu'elle est obtenue lors de la régulation de la pression de meulage conformément à la figure 3 au moyen du potentiomètre 71, les valeurs de consigne de la pression de meulage varient conformément à un programme pré-établi. Une telle régulation de la pression de meulage commandée par programme est représentée sur la figure 4.

Sur la figure 4, on a représenté à nouveau le chariot porte-outil 24 avec le moteur de meulage 23, le moteur à couple constant 28 appliquant la pression de meulage et la capsule dynamométrique 31. Le moteur à couple constant 28 est piloté par le servo-amplificateur 70 et une résistance équivalente 73 est intercalée entre le moteur à couple constant 28 et le servo-amplificateur 70.

L'élément le plus important du dispositif pour "la programmation omnidirectionnelle" est un compteur numérique de présélection courant 78 à caractéristique progressive. Le compteur numérique 78 comporte dix commutateurs de présélection 79. A chaque commutateur de présélection 79 est associée une sortie de relais. Les contacts de relais commandés par les sorties de relais individuelles sont désignés par $Z_1$ à $Z_{10}$.

Les commutateurs de présélection 79 du compteur numérique 78 permettent de déterminer les points du trajet de l'outil de meulage sur lesquels la pression de meulage doit être augmentée ou diminuée. Ces points sont avantageusement déterminés ou établis de manière empirique.

L'incrémentation horlogique du compteur 78 s'effectue, par l'intermédiaire des deux générateurs d'impulsions d'horloge numériques 80 et 81 parmi lesquels le générateur d'impulsions d'horloge numériques 80 est couplé au mécanisme d'entraînement 13, 14 (figure 1) suivant l'axe X et le générateur d'impulsions d'horloge numériques 81 est couplé au mécanisme d'entraînement 4, 6 (figure 1) suivant l'axe Y. A chaque signal d'horloge d'un des deux générateurs de signaux d'horloge 80 et 81, le compteur 78 est incrémenté et le nombre des impulsions d'horloge apparaît sur le dispositif d'affichage 82. Dès qu'une valeur réglée sur un des commutateurs de présélection 79 correspond au nombre d'impulsions d'horloge apparaissant sur le dispositif d'affichage 82, le relais associé fonctionne et ferme les contacts correspondants $Z_1$ à $Z_{10}$.

Un potentiomètre $P_1$ de valeur de consigne de la pression de meulage est associé aux contacts de relais $Z_1$, $Z_3$, $Z_5$, $Z_7$ et $Z_9$. Le potentiomètre $P_1$ détermine la pression de meulage de base qui doit intervenir, par exemple sur des sections rectilignes des bords. Un potentiomètre de valeur de consigne propre $P_2$, $P_3$, $P_4$, $P_5$ et $P_6$ est associé chaque fois à un contact de relais $Z_2$, $Z_4$, $Z_6$, $Z_8$ et $Z_{10}$, et permet de régler individuellement la pression de meulage souhaitée à l'endroit correspondant du trajet de meulage. Le potentiomètre $P_0$ sert, au terme du processus de meulage, à éliminer la pression de meulage, c'est-à-dire à ramener le chariot 24 dans sa position de repos.

Le mode de fonctionnement du dispositif est le suivant : au démarrage de la machine à meuler, les générateurs de signaux d'horloge numériques 80, 81 sont mis en rotation d'une manière correspondant au trajet pré-établi et incrémentent le compteur numérique 78. Les commutateurs de présélection 79 permettent aux contacts de relais $Z_1$ à $Z_{10}$ de commuter aux endroits prédéterminés du trajet. Avant que le premier contact de relais $Z_1$ soit actionné, la pression de meulage de base réglée au potentiomètre $P_1$ est appliquée. Si, au point réglé du trajet, le contact de relais $Z_1$ commute, il y a commutation sur le potentiomètre $P_2$. Lorsque le point du trajet réglé sur le commutateur de présélection suivant est atteint, le contact de relais $Z_2$ est actionné, ce qui fait déclencher le potentiomètre $P_2$ et provoque à nouveau la commutation sur le potentiomètre $P_1$. Lorsque le contact de relais $Z_3$ suivant est actionné, il y a à nouveau une commutation sur le potentiomètre $P_3$ et lorsque le contact de relais $Z_4$ commute, il y a à nouveau retour vers le potentiomètre $P_1$. L'opération de commutation se répète alors à chaque point qui est présélectionné par le commutateur de présélection 79.

On suppose naturellement pour la régulation décrite de la pression de meulage que le contact $d_2$ est fermé lors du démarrage de la machine et reste fermé jusqu'à ce que le contour de la feuille de verre ait été parcouru. Au terme de l'opération de meulage, le contact $d_2$ s'ouvre et le contact $d_3$ se ferme. La fermeture du contact $d_3$ provoque l'actionnement du servo-amplificateur 70 par la valeur de consigne réglée au potentiomètre $P_0$ avec pour conséquence que le chariot 24 est ramené dans sa position de départ. Le contact $d_1$, qui ramène le compteur numérique 78 à zéro se ferme en même temps que les contacts $d_2$ et $d_3$.

Sur la figure, le compteur de présélection est pourvu de dix commutateurs de présélection. Il va de soi qu'il est possible d'augmenter le nombre de commutateurs de présélection sans que le dispositif en soit pour autant autrement modifié.

Il est aussi possible de stocker les valeurs de consigne déterminées selon les diverses formes de feuilles de verre, pour les points de commutation et pour le réglage des potentiomètres $P_1$ à $P_6$ sur un support de données, en particulier sur la bande magnétique portant les informations de trajet pour la commande des moteurs d'entraînement 13, 4 et de les transmettre à partir du support de données automatiquement aux commutateurs de présélection 79 et aux potentiomètres $P_1$ à $P_6$. Toutes les données nécessaires pour le meulage d'un modèle déterminé peuvent de cette façon être stockées sur le support de données, par exemple sur la bande magnétique.

0114141

REVENDICATIONS

1. Procédé pour le pilotage automatique d'une machine suivant un trajet, en particulier d'une machine à meuler les bords de feuilles de verre comportant une tête de meulage portant l'outil de meulage montée sur un chariot à mouvement composé qui se déplace suivant deux directions X et Y perpendiculaires, dans lequel la tête de meulage effectue une rotation de 360° pendant son déplacement autour de la feuille de verre, et un moteur vireur de tête commandé par programme régit la position angulaire de ladite tête de meulage, caractérisé en ce qu'on dérive, pendant l'opération de meulage, les signaux de commande pour le moteur vireur de la tête de meulage, des signaux stockés sur un support d'information en vue du pilotage X Y du chariot.

2. Dispositif pour l'exécution du procédé suivant la revendication 1 comprenant un outil de travail, par exemple une tête de meulage (18), montée sur un chariot (1) à double mouvement entraîné par moteur suivant deux directions X, Y, et un moteur vireur de tête (20) caractérisé en ce qu'un microprocesseur est prévu pour dériver les signaux de commande pour la rotation de la tête de meulage (18) à partir des signaux de commande digitalisés pour les moteurs d'entraînement suivant les direction X et Y.

3. Dispositif pour l'exécution du procédé suivant la revendication 1, comprenant un outil de travail, par exemple une tête de meulage (18) montée sur un chariot (1) à double mouvement entraîné par moteur suivant deux directions X, Y, et un moteur vireur de tête (21) caractérisé en ce qu'il comprend un calculateur analogique pour dériver les signaux de commande pour la rotation de la tête de meulage (18) à partir des tensions analogiques ($U_x$, $U_y$) correspondant aux mouvements de rotation des moteurs d'entraînement suivant les direction X et Y et fournies par des transducteurs, notamment des machines tachymétriques.

4. Dispositif suivant la revendication 3, caractérisé en ce que le calculateur analogique comprend deux instruments tournants à caractéristique sinus-cosinus dont les axes de rotation sont reliés mécaniquement à l'axe de rotation du moteur vireur (20) de la tête de meulage (18) et qui, connectés en série, fournissent une tension différentielle appliquée en tant que tension de consigne au servo-amplificateur (62) pilotant le moteur vireur (20).

5. Dispositif suivant la revendication 4, caractérisé en ce que les transducteurs fournissant les tensions analogiques ($U_x$, $U_y$) de la vitesse de déplacement du chariot composé sont des machines tachymé-

0114141

triques (42, 46) couplées par leurs axes de rotation aux moteurs d'entraînement (13, 4) correspondant à chaque axe.

6. Dispositif suivant l'une des revendications 4 ou 5, caractérisé en ce que les instruments tournants à caractéristique sinus-cosinus sont des potentiomètres tournants ou des générateurs tournants de fonction à induction. ·

7. Dispositif suivant la revendication 6, caractérisé en ce que les instruments tournants sont des instruments à quatre quadrants (32', 32") qui fournissent une tension différentielle servant à piloter un servo-amplificateur à quatre quadrants (62).

8. Dispositif suivant l'une quelconque des revendications précédentes caractérisé en ce que le moteur (23) d'entraînement de la meule et la meule (22) sont montés, dans la tête de meulage tournante (18), coulissant sur un chariot porte-outil (24), et un moteur à couple constant (28) agissant sur le chariot (24) est prévu pour régler la pression de meulage exercée par la meule (22) sur le bord de la feuille de verre.

9. Dispositif suivant la revendication 8, caractérisé en ce que une capsule dynamométrique (31) est prévue pour transmettre au chariot (24) la pression produite par le moteur à couple constant (28), le signal de sortie électrique de la capsule (31) étant amené à un servo-amplificateur (70) qui pilote le moteur à couple constant (28) pour régir la pression pré-établie.

10. Dispositif suivant la revendication 9, caractérisé en ce que pour modifier la pression de meulage sur le trajet de l'outil de meulage autour de la feuille de verre, un compteur numérique (78) piloté par des générateurs de signaux d'horloge numériques (80, 81) qui reproduisent les déplacements du chariot porte-outil dans la direction X et dans la direction Y est prévu et comporte des commutateurs de présélection (79) et des potentiomètres de réglage ($P_1$ à $P_{10}$) associée à des contacts de relais ($Z_1$ à $Z_{10}$) des commutateurs de présélection, qui sont actionnés dans l'ordre des commutateurs de présélection préprogrammés.

0114141

Fig. 1

0114141

_Fig. 2_

**Fig. 3**

0114141

Fig. 4